# EUROPÄISCHE PATENTSCHRIFT

(11) **EP 0 572 835 B1**
(45) Veröffentlichungstag und Bekanntmachung des Hinweises auf die Patenterteilung: **04.12.1996**
(21) Anmeldenummer: 93107843.0
(22) Anmeldetag: 13.05.1993
(51) Int. Cl.: H01J 61/32, H01J 61/72, H01J 61/33

(54) **Quecksilberdampf-Niederdruckentladungslampe**
Low-pressure mercury vapor discharge lamp
Lamp à vapeur de mercure à basse pression

(30) Priorität: 26.05.1992 DE 9207139 U
(43) Veröffentlichungstag der Anmeldung: 08.12.1993
(73) Patentinhaber: Patent-Treuhand-Gesellschaft für elektrische Glühlampen mbH, 81543 München (DE)
(72) Erfinder: Körfer, Günter, W-8901 Zusmarshausen (DE)

(56) Entgegenhaltungen:
- EP-A- 0 061 758
- EP-A- 0 296 534
- WO-A-89/09487
- US-A- 4 558 400

## Beschreibung

Die Erfindung betrifft eine Quecksilberdampf-Niederdruckentladungslampe mit einem Entladungsgefäß aus einem oder mehreren U-förmig gebogenen Glasrohren (U-Rohre), wobei das einzelne U-Rohr aus zwei parallel zueinander verlaufenden Längsrohrabschnitten besteht, die an ihrem einen Ende durch einen Querrohrabschnitt verbunden und an ihrem anderen Ende jeweils abgedichtet sind und mehrere U-Rohre durch kurze rohrförmige Querverschmelzungen einen zusammenhängenden, gewundenen Entladungsweg bilden, und wobei die beiden äußeren Enden des Entladungsgefäßes jeweils Elektrodeneinschmelzungen aufweisen, die äußere Mantellinie des oder der Querrohrabschnitte im wesentlichen gerade verläuft und der Abstand der Mantellinie von der dieser gegenüberliegenden inneren Wandung des U-Rohres in den Rohrbiegungen jeweils größer ist als der äußere Durchmesser der Längsrohrabschnitte.

Derartige Quecksilberdampf-Niederdruckentladungslampen sind aus der EP-A-0 061 758 und EP-A-0 143 419 bekannt. Dabei werden die Querrohrabschnitte, die einen im wesentlichen ellipsenförmigen Querschnitt aufweisen, durch sogenanntes Formblasen erstellt, nachdem der betreffende Bereich eines Glasrohres erwärmt und entsprechend gebogen worden ist. Dadurch entstehen aber insbesondere am Scheitel des Bogens um den Querschnitt herum und in den äußeren Ecken des Bogens stark unterschiedliche Glasstärken. Der Querrohrabschnitt wird dadurch stoßempfindlicher als der Längsrohrabschnitt. Besonders bei der Massenfertigung der Entladungsröhren kommt es immer wieder vor, daß einzelne Entladungsröhren aneinanderstoßen und dann häufig zerstört werden, wenn ein Querrohrabschnitt gegen eine weitere Entladungsröhre stößt.

Der Erfindung liegt daher die Aufgabe zugrunde, eine Quecksilberdampf-Niederdruckentladungslampe zu schaffen, deren Querrohrabschnitt oder -abschnitte eine erhöhte Bruchfestigkeit aufweisen, um die Ausschußquote in der Produktion zu senken.

Diese Aufgabe wird bei einer Quecksilberdampf-Niederdruckentladungslampe der eingangs genannten Art erfindungsgemäß dadurch gelöst, daß der bzw. die Querrohrabschnitte einen im wesentlichen parabelförmigen Außenquerschnitt mit einer die Parabelöffnung abschließenden im wesentlichen geraden Basisseite aufweisen, wobei die jeweiligen Basisecken abgerundet sind, der Parabelscheitel mit der äußeren Mantellinie des oder der Querrohrabschnitte zusammenfällt und die Querschnittsfläche des parabelförmigen Querschnitts im wesentlichen gleich der Querschnittsfläche der Längsrohrabschnitte ist.

Unter im wesentlichen "parabelförmig" wird eine Form verstanden, die nur annähernd einer Parabel entspricht, also nicht exakt einer mathematischen Parabelgleichung gehorchen muß.

Dadurch ist sichergestellt, daß die Wandstärke des Querrohrabschnitts sehr gleichmäßig wird und nur gering um die Wandstärke der Längsrohrabschnitte schwankt, wodurch die Querrohrabschnitte eine hohe Bruchfestigkeit und eine geringe Spannungsbelastung aufweisen.

Besonders vorteilhaft ist die Glaswandstärkenverteilung, wenn das Verhältnis des äußeren Krümmungsradius des Parabelscheitels (R_{P}) zum äußeren Krümmungsradius der abgerundeten Basisecken (R_{B}) zwischen 0,7 und 1,1 beträgt, wobei das Verhältnis des Außenabstands (D_{Q}) der äußeren Mantellinie (M_{Q}) von der dieser gegenüberliegenden inneren Wandung des U-Rohres in den Querrohrabschnitten und dem Außendurchmesser (D_{L}) in den Längsrohrabschnitten zwischen 0,8 und 1,3 beträgt.

Die für einen optimalen Quecksilberdampfdruck notwendigen kalten Stellen in den äußeren Rohrbiegungsecken sind dann sichergestellt, wenn das Verhältnis des Außendurchmessers (D_{LQ}) in der jeweiligen Rohrbiegung bzw. Rohrecke zum Außendurchmesser (D_{Q}) zwischen 1,1 und 1,3 beträgt, wobei das Verhältnis 1,2 bevorzugt wird.

Weitere Vorteile und Merkmale der Erfindung ergeben sich aus der folgenden Beschreibung einer Ausführungsform und den Zeichnungen, auf die Bezug genommen wird. Es zeigen:
- Figur 1a:: eine schematisierte Schnittdarstellung einer ungesockelten Quecksilberdampf-Niederdruckentladungslampe;
- Figur 1b:: eine Seitenansicht der Quecksilberdampf-Niederdruckentladungslampe gemäß Figur 1a mit gesockelten Enden; und
- Figur 2:: eine schematische perspektivische Schnittdarstellung des Querrohrabschnittes.

Das in Figur 1a gezeigte rohrförmige Entladungsgefäß oder Entladungsrohr 1 besteht aus den beiden Längsrohrabschnitten 2, 3 und dem Querrohrabschnitt 4. Die U-förmige Biegung des Entladungsrohres 1 ist so ausgebildet, daß die äußere Mantellinie M_{Q} des Querrohrabschnitts 4 gerade und im wesentlichen senkrecht zu den äußeren Mantellinien M_{L} der beiden Längsrohrabschnitte 2, 3 verläuft. Der äußere Durchmesser D_{L} der jeweiligen Längsrohrabschnitte 2, 3 beträgt ca. 12 mm, wobei der Abstand der Mantellinie M_{Q} von der gegenüberliegenden Glasaußenwandung bzw. der Durchmesser D_{Q} des Querrohrabschnitts 4 in dessen Mitte derart wählbar ist, daß sich ein Verhältnis von D_{Q}/D_{L} von etwa 0,8 bis 1,3 ergibt. Des weiteren ist der Rohrübergang zwischen den Längsrohrabschnitten 2, 3 und dem Querrohrabschnitt 4 so verlaufend, daß das Verhältnis des Außendurchmessers D_{LQ} in der jeweiligen Rohrbiegung zum Außendurchmesser D_{Q} etwa zwischen 1,1 und 1,3 betragen kann. Ferner liegt das Verhältnis D_{LQ}/D_{L} im Bereich von 1,05 bis 1,5. Die sich dabei ergebenden kalten Stellen in den äußeren Rohrbiegungen 5, 6 sorgen im Betrieb der Lampe für einen optimalen Quecksilberdampfdruck von etwa 8·10⁻³ mbar. Die innere Rohrbiegung 7 weist einen äußerst kleinen Krümmungsradius auf, so daß der lichte Abstand d zwischen den beiden Längsrohrabschnitten 2, 3 kleiner als 5 mm, also kleiner als D_{L}/2, ist. Trotz eines einstückigen Entladungsrohres 1 ist eine relativ kompakte Lampenkonstruktion erreicht. Die Innenoberfläche des rohrförmigen Entladungsgefäßes 1 ist mit einer Leuchtstoffbeschichtung 8 versehen, die üblicherweise aus einem Dreibandenleuchtstoff besteht. An den beiden Enden des Entladungsgefäßes 1 sind jeweils Elektrodensysteme 9, 10 mittels Quetschdichtungen 11, 12 eingeschmolzen. Eines der Rohrenden ist mit einem abgeschmolzenen Pumpstengel 13 versehen. Als Füllung enthält das Entladungsgefäß 1 Quecksilber in einer Menge von ca. 10 mg sowie 3 mbar Argon als Zündgas.

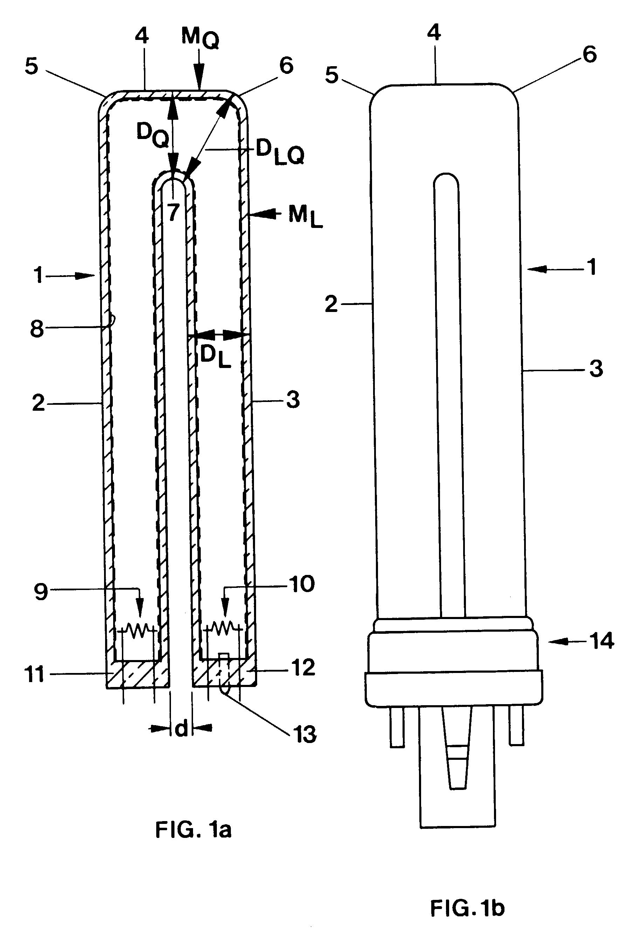

In Figur 1b ist die Quecksilberdampf-Niederdruckentladungslampe nach Figur 1a mit montiertem Sockel 14 gezeigt (im einzelnen nicht weiter erläutert). Im Innern des Sockels 14 ist noch ein Glimmzünder mit dem entsprechenden Entstörkondensator untergebracht (nicht dargestellt).

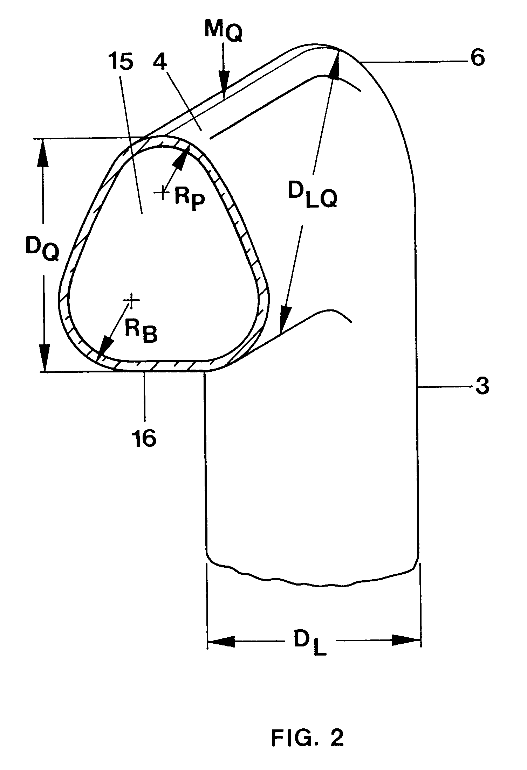

Der in Figur 2 dargestellte Querschnitt des Querrohrabschnitts ist parabelförmig ausgebildet mit einer die Parabelöffnung 15 abschließenden, leicht gekrümmten Basisseite 16, wobei die Ecken an der Parabelbasis 16 abgerundet sind. Im dargestellten Querschnitt weisen der Parabelscheitelpunkt und die Basisrundungen unterschiedliche äußere Krümmungsradien R_{P} bzw. R_{B} auf, es ist aber auch möglich, diese Krümmungen mit einem einheitlichen Krümmungsradius zu versehen. Das Verhältnis des Krümmungsradius R_{P} des Parabelscheitels zum Krümmungsradius R_{B} der abgerundeten Basisecken beträgt dabei zwischen 0,7 und 1,1. Zusätzlich muß sichergestellt sein, daß der Außendurchmesser D_{LQ} den Rohrbiegungen 5, 6 größer ist als der Außendurchmesser D_{L} der Längsrohrabschnitte 2 und 3 und andererseits, daß die Querschnittsflächen des Querrohrabschnitts und des Längsrohrabschnitts annähernd gleich groß sind.

## Patentansprüche

1. Quecksilberdampf-Niederdruckentladungslampe mit einem Entladungsgefäß (1) aus einem oder mehreren U-förmig gebogenen Glasrohren (U-Rohre), wobei das einzelne U-Rohr aus zwei parallel zueinander verlaufenden Längsrohrabschnitten (2, 3) besteht, die an ihrem einen Ende durch einen Querrohrabschnitt (4) verbunden und an ihrem anderen Ende jeweils abgedichtet sind und mehrere U-Rohre durch kurze rohrförmige Querverschmelzungen einen zusammenhängenden, gewundenen Entladungsweg bilden, und wobei
- die beiden äußeren Enden des Entladungsgefäßes jeweils Elektrodeneinschmelzungen aufweisen,
- die äußere Mantellinie (M_{Q}) des oder der Querrohrabschnitte (4) im wesentlichen gerade verläuft und
- der Abstand (D_{LQ}) der Mantellinie (M_{Q}) von der dieser gegenüberliegenden inneren Wandung des U-Rohres in den Rohrbiegungen jeweils größer ist als der äußere Durchmesser (D_{L}) der Längsrohrabschnitte,
dadurch gekennzeichnet, daß der oder die Querrohrabschnitte (4) einen im wesentlichen parabelförmigen Außenquerschnitt mit einer die Parabelöffnung abschließenden im wesentlichen geraden Basisseite aufweisen, wobei die jeweiligen Basisecken abgerundet sind, der Parabelscheitel mit der äußeren Mantellinie (M_{Q}) des oder der Querrohrabschnitte (4) zusammenfällt und die Querschnittsfläche des parabelförmigen Querschnitts im wesentlichen gleich der Querschnittsfläche der Längsrohrabschnitte ist.

2. Quecksilberdampf-Niederdruckentladungslampe nach Anspruch 1, dadurch gekennzeichnet, daß das Verhältnis der Krümmungsradien R_{P}/R_{B} zwischen 0,7 und 1,1 beträgt, wobei R_{P} der äußere Krümmungsradius des Parabelscheitels und R_{B} die äußeren Krümmungsradien der abgerundeten Basisecken bedeuten.

3. Quecksilberdampf-Niederdruckentladungslampe nach Anspruch 1 oder 2, dadurch gekennzeichnet, daß das Verhältnis D_{Q}/D_{L} zwischen 0,8 und 1,3 beträgt, wobei D_{Q} der Außenabstand der äußeren Mantellinie (M_{Q}) von der dieser gegenüberliegenden inneren Wandung des U-Rohres in den Querrohrabschnitten (4) ist und D_{L} der Außendurchmesser in den Längsrohrabschnitten (2, 3).

4. Quecksilberdampf-Niederdruckentladungslampe nach einem der Ansprüche 1 bis 3, dadurch gekennzeichnet, daß das Verhältnis D_{LQ}/D_{L} zwischen 1,05 und 1,5 beträgt.

5. Quecksilberdampf-Niederdruckentladungslampe nach einem der Ansprüche 1 bis 4, dadurch gekennzeichnet, daß das Verhältnis D_{LQ}/D_{Q} zwischen 1,1 und 1,3 beträgt.

6. Quecksilberdampf-Niederdruckentladungslampe nach einem der Ansprüche 1 bis 5, dadurch gekennzeichnet, daß der lichte Abstand (d) zwischen benachbarten, durch einen Querrohrabschnitt (4) verbundenen Längsrohrabschnitten (2, 3) gleich oder kleiner dem halben Durchmesser (D_{L}) dieser Längsrohrabschnitte (2, 3) ist.

7. Quecksilberdampf-Niederdruckentladungslampe nach einem der Ansprüche 1 bis 6, dadurch gekennzeichnet, daß der oder die Querrohrabschnitte (4) an der nach außen gewandten Mantelfläche, an der äußeren Mantellinie (M_{Q}), in der Mitte eine Delle aufweisen.

8. Quecksilberdampf-Niederdruckentladungslampe nach einem der Ansprüche 1 bis 7, dadurch gekennzeichnet, daß die abgedichteten Enden der Längsrohrabschnitte (2, 3) des Entladungsgefäßes (1) Quetschabdichtungen (11, 12) aufweisen.

9. Quecksilberdampf-Niederdruckentladungslampe nach einem der Ansprüche 1 bis 8, dadurch gekennzeichnet, daß das Entladungsgefäß (1) im Inneren mit Leuchtstoff (8) beschichtet ist.

## Claims

1. Low-pressure mercury vapour discharge lamp having a discharge vessel (1) consisting of one or more glass tubes bent into a U-shape (U-tubes), the individual U-tube consisting of two longitudinal tube sections (2, 3) which extend parallel to each other, are joined at one of their ends by a transverse tube section (4) and are each sealed off at their other end, and a plurality of U-tubes forming a coherent coiled discharge path by short tubular transverse fused segments,
- both external ends of the discharge vessel each having melted-in electrodes,
- the external generatrix (M_{Q}) of the transverse tube section or sections (4) extending essentially straight, and
- the distance (D_{LQ}) of the generatrix (M_{Q}) from that inner wall of the U-tube which lies opposite it in the tube bends being in each case greater than the external diameter (D_{L}) of the longitudinal tube sections,
characterized in that the transverse tube section or sections (4) has (have) an essentially parabolic external cross-section with an essentially straight base side closing off the opening of the parabola, the respective base corners being rounded, the parabola vertex coinciding with the external generatrix (M_{Q}) of the transverse tube section or sections (4) and the cross-sectional area of the parabolic cross-section being essentially equal to the cross-sectional area of the longitudinal tube sections.

2. Low-pressure mercury vapour discharge lamp according to Claim 1, characterized in that the radius of curvature ratio R_{P}/R_{B} is between 0.7 and 1.1, Rₚ being the external radius of curvature of the parabola vertex and R_{B} being the external radii of curvature of the rounded base corners.

3. Low-pressure mercury vapour discharge lamp according to Claim 1 or 2, characterized in that the ratio D_{Q}/D_{L} is between 0.8 and 1.3, D_{Q} being the external distance of the external generatrix (M_{Q}) from that inner wall of the U-tube which lies opposite it in the transverse tube sections (4) and D_{L} being the external diameter in the longitudinal tube sections (2, 3).

4. Low-pressure mercury vapour discharge lamp according to one of Claims 1 to 3, characterized in that the ratio D_{LQ}/D_{L} is between 1.05 and 1.5.

5. Low-pressure mercury vapour discharge lamp according to one of Claims 1 to 4, characterized in that the ratio D_{LQ}/D_{Q} is between 1.1 and 1.3.

6. Low-pressure mercury vapour discharge lamp according to one of Claims 1 to 5, characterized in that the internal distance (d) between neighbouring longitudinal tube sections (2, 3) joined by a transverse tube section (4) is equal to or less than half the diameter (D_{L}) of these longitudinal tube sections (2, 3).

7. Low-pressure mercury vapour discharge lamp according to one of Claims 1 to 6, characterized in that the transverse tube section or sections (4) has/have, a hollow in the middle on their externally facing generated surface, at the external generatrix (M_{Q}).

8. Low-pressure mercury vapour discharge lamp according to one of Claims 1 to 7, characterized in that the sealed-off ends of the longitudinal tube sections (2, 3) of the discharge vessel (1) have pinch seals (11, 12).

9. Low-pressure mercury vapour discharge lamp according to one of Claims 1 to 8, characterized in that the discharge vessel (1) is internally coated with fluorescent material (8).

## Revendications

1. Lampe à décharge à basse pression à vapeur de mercure, comportant un tube de décharge (1) constitué d'un ou de plusieurs tubes de verre coudés en forme de U (tubes en U), le tube en U individuel étant constitué de deux tronçons (2,3) de tube longitudinaux qui s'étendent parallèlement l'un à l'autre, qui sont reliés à l'une de leur extrémité par un tronçon (4) de tube transversal et qui sont rendus étanches à leur autre extrémité et plusieurs tubes en U formant une voie de décharge sinueuse continue par des scellements transversaux tubulaires courts, et
- les deux extrémités extérieures du tube de décharge comportent chacune des scellements d'étanchéité d'électrodes,
- la génératrice (M_{Q}) extérieure du ou des tronçons (4) de tube transversaux s'étend sensiblement en ligne droite et
- l'écartement (D_{LQ}) de la génératrice (M_{Q}) par rapport à la paroi intérieure opposée à celle-ci du tube en U dans les courbures de tube est supérieur au diamètre (D_{L}) extérieur du tronçon de tube longitudinal,
caractérisée en ce que le ou les tronçons (4) de tube transversal a (ont) une section transversale extérieure sensiblement de forme parabolique avec un côté de base fermant l'ouverture de la parabole sensiblement droit, les coins de base étant respectivement arrondis, le sommet de la parabole coïncidant avec la génératrice (M_{Q}) extérieure du ou des tronçons de tube transversal et la surface en coupe transversale de la section transversale de forme parabolique étant sensiblement égale à la surface en coupe transversale du tronçon de tube longitudinal.

2. Lampe à décharge à basse pression à vapeur de mercure suivant la revendication 1, caractérisée en ce que le rapport des rayons de courbure R_{P}/R_{B} est compris entre 0,7 et 1,1, R_{P} étant le rayon de courbure extérieur du sommet de la parabole et R_{B} étant le rayon de courbure extérieur du coin de base arrondi.

3. Lampe à décharge à basse pression à vapeur de mercure suivant la revendication 1 ou 2, caractérisée en ce que le rapport D_{Q}/D_{L} est compris entre 0,8 et 1,3, D_{Q} étant l'écartement extérieur de la génératrice (M_{Q}) extérieure par rapport à la paroi intérieure opposée à celle-ci du tube en U dans le tronçon (4) de tube transversal et D_{L} étant le diamètre extérieur du tronçon (2,3) de tube longitudinal.

4. Lampe à décharge à basse pression à vapeur de mercure suivant l'une des revendications 1 à 3, caractérisée en ce que le rapport D_{LQ}/D_{L} est compris entre 1,05 et 1,5.

5. Lampe à décharge à basse pression à vapeur de mercure suivant l'une des revendications 1 à 4, caractérisée en ce que le rapport D_{LQ}/D_{Q} est compris entre 1,1 et 1,3.

6. Lampe à décharge à basse pression à vapeur de mercure suivant l'une des revendications 1 à 5, caractérisée en ce que la distance (d) entre des tronçons (2,3) de tube longitudinaux voisins reliés par un tronçon (4) de tube transversal est égale ou inférieure à la moitié du diamètre (D_{L}) de ce tronçon (2,3) de tube longitudinal.

7. Lampe à décharge à basse pression à vapeur de mercure suivant l'une des revendications 1 à 6, caractérisée en ce que le ou les tronçons (4) de tube transversal comportent, sur la surface latérale dirigée vers l'extérieur, sur la génératrice (M_{Q}) extérieure, une déformation au milieu.

8. Lampe à décharge à basse pression à vapeur de mercure suivant l'une des revendications 1 à 7, caractérisée en ce que les extrémités qui ont été rendues étanches du tronçon (2,3) de tube longitudinal du tube de décharge (1) comportent des étanchéités de pincement.

9. Lampe à décharge à basse pression à vapeur de mercure suivant l'une des revendications 1 à 8, caractérisée en ce que le tube de décharge (1) est revêtu à l'intérieur d'une matière (8) luminescente.
